# EUROPÄISCHE PATENTANMELDUNG

(11) **EP 1 894 809 A2**
(43) Veröffentlichungstag der Anmeldung: **05.03.2008**
(21) Anmeldenummer: 07011926.8
(22) Anmeldetag: 19.06.2007
(51) Int. Cl.: B62B 5/02

(54) **Treppensteig- und Transportvorrichtung**

(30) Priorität: 29.08.2006 DE 202006013276 U
(71) Anmelder: AAT Alber Antriebstechnik GmbH, 72458 Albstadt (DE)
(72) Erfinder:
(74) Vertreter: Kohler Schmid Möbus

(57) **Zusammenfassung**

Treppensteig- und Transportvorrichtung (10) zum Transport von Gegenständen jedweder Art und/oder Personen, mit einer Rahmenkonstruktion (12), an der neben einer Lastaufnahmevorrichtung (14, 15) für den zu transportierenden Gegenstand und/oder für die zu transportierende Person Lauf- und Lenkräder (16, 18) und Bedienelemente (26, 28) vorgesehen sind, wobei hinter dem Lenkrad (18) und vor dem Laufrad (16) mindestens ein Stützfuß (20) vorgesehen ist, der bei gleichzeitiger Auflage der Lenk- und Laufräder (18, 16) auf einer Bodenoberfläche von der Bodenoberfläche beabstandet ist.

## Beschreibung

Die Erfindung betrifft eine Treppensteig- und Transportvorrichtung zum Transport von Gegenständen jedweder Art und/oder Personen, mit einer Rahmenkonstruktion, an der neben einer Lastaufnahmevorrichtung für den zu transportierenden Gegenstand und/oder für die zu transportierende Person, Laufräder, Lenkräder und Bedienelemente vorgesehen sind.

Derartige Treppensteig- und Transportvorrichtungen sind beispielsweise durch die Patentanmeldungen DE 195 19 109 A1 und EP 0 903 278 A2 bekannt geworden. Darüber hinaus vertreibt die Firma AAT Alber Antriebstechnik GmbH eine Treppensteig- und Transportvorrichtung, die neben den Laufrädern auch Lenkräder aufweist. Vertrieben wird eine derartige Vorrichtung beispielsweise unter der Bezeichnung "c-max U1".

Treppensteig- und Transportvorrichtungen werden in bekannter Weise bevorzugt für den Transport von Personen eingesetzt, die aus gesundheitlichen Gründen nicht mehr eigenständig eine Treppe hinauf- und/oder hinabsteigen können. Dabei können derartige Steigvorrichtungen auch einen motorischen Antrieb aufweisen, der das Treppenauf- und -absteigen mit dieser bekannten Vorrichtung erleichtert. Die Treppensteig- und Transportvorrichtung wird in der Regel von einer Person bewegt und gesteuert, indem sie über Bedienelemente, wie Handgriffe und/oder Schalt- und Bedienknöpfe, die Treppensteig- und Transportvorrichtung verfährt.

Wird beispielsweise ein Absatz oder eine Treppenstufe beim Verschieben einer solchen bekannten Treppensteig- und Transportvorrichtung auf dem Boden durch eine sie bedienende Person übersehen, so kann die bekannte Vorrichtung kippen und an einer Treppe unbeabsichtigt abstürzen. Die in der Regel in die Vorrichtung fest eingebundene zu transportierende Person kann sich bei einem solchen Sturz erheblich verletzen.

Aufgabe der Erfindung ist es deshalb, eine bekannte Treppensteig- und Transportvorrichtung so weiterzuentwickeln, dass ein unbeabsichtigtes Kippen einer Treppensteig- und Transportvorrichtung in Lauf- bzw. Verfahrrichtung vermieden wird.

Gelöst wird die Problemstellung erfindungsgemäß dadurch, dass hinter dem Lenkrad und vor dem Laufrad mindestens ein Stützfuß vorgesehen ist, der bei gleichzeitiger Auflage der Lenk- und Laufräder auf einer Bodenoberfläche von der Bodenoberfläche beabstandet ist.

Dies hat den Vorteil, dass der oder die Stützfüße beim Kippen einer erfindungsgemäßen Treppensteig- und Transportvorrichtung in Bewegungsrichtung den Kippvorgang schon in seinem Ansatz unterbrechen, indem immer die Stützfüße auf dem Boden aufsetzen, wenn die Lenkräder keine Bodenhaftung mehr haben und über beispielsweise eine Treppenstufenkante hinaus über diese Kante vorstehen. Durch das Aufsetzen eines oder mehrerer Stützfüße erkennt das Bedienpersonal einer erfindungsgemäßen Treppensteig- und Transportvorrichtung, dass sich beim Bewegen dieser Vorrichtung ein Störfall eingestellt hat. Unfälle werden mit dieser Ausgestaltung an Treppensteig- und Transportvorrichtungen in einem erheblichen Umfang vermieden und individuellen Fehlern eines Bedienpersonals wird erfolgreich entgegengewirkt.

In einer weiteren vorteilhaften Ausgestaltung der Erfindung weist die erfindungsgemäße Treppensteig- und Transportvorrichtung zwei Stützfüße an der Rahmenkonstruktion auf, die beabstandet voneinander zwischen den jeweiligen Lenk- und Laufrädern, in der durch ein Lenk- und ein Laufrad definierten Ebene, angeordnet sind. Dies hat den Vorteil, dass durch eine derartige Anordnung der Stützfüße an der Rahmenkonstruktion eine Treppensteig- und Transportvorrichtung zusätzlich eine verbesserte seitliche Stabilisierung erhält, d. h. auch einem seitlichen Kippen der erfindungsgemäßen Treppensteig- und Transportvorrichtung wird erfolgreich entgegengewirkt.

In einer weiteren Ausgestaltung der Erfindung ist der mindestens eine Stützfuß höhenverstellbar. Über höhenverstellbare Füße lassen sich die Stützfüße an unterschiedlich große Lenkräder anpassen.

Weiterhin ist es vorteilhaft, wenn der mindestens eine Stützfuß von der Rahmenkonstruktion abnehmbar ist. Mit einer derartigen Maßnahme ist es möglich, dass vorhandene Stützfüße an unterschiedliche Treppensteig- und Transportvorrichtungen montiert werden können. Auch eine Nachrüstung von Stützfüßen an schon vorhandenen Treppensteig- und Transportvorrichtungen ist möglich.

Ist der mindestens eine Stützfuß an der Rahmenkonstruktion verschiebbar vorgesehen, so kann der Abstand eines Stützfußes von dem Lenkrad je nach Bedarf variiert werden. Wichtig ist es, dass der gesamte Schwerpunkt einer unter Last befindlichen erfindungsgemäßen Treppensteig- und Transportvorrichtung hinter einem oder den mehreren Stützfüßen liegt, damit beim Aufsetzen der Stützfüße auf dem Boden ein weiteres Kippen der Treppensteig- und Transportvorrichtung vermieden wird.

In weiterer Ausgestaltung der Erfindung weist das freie Ende des mindestens einen Stützfußes eine Ummantelung aus einem zäh- oder gummielastischen Werkstoff auf. Dabei kann es sich um eine aus gummielastischem Material bestehende Kappe oder um einen Stopfen handeln, der das freie Ende eines Stützfußes abdeckt. Mit einer derartigen Ausgestaltung werden Beschädigungen an Stufen/Treppen auch dann vermieden, wenn ein oder mehrere Stützfüße abrupt auf einer Treppenoberfläche oder Bodenoberfläche aufsetzen.

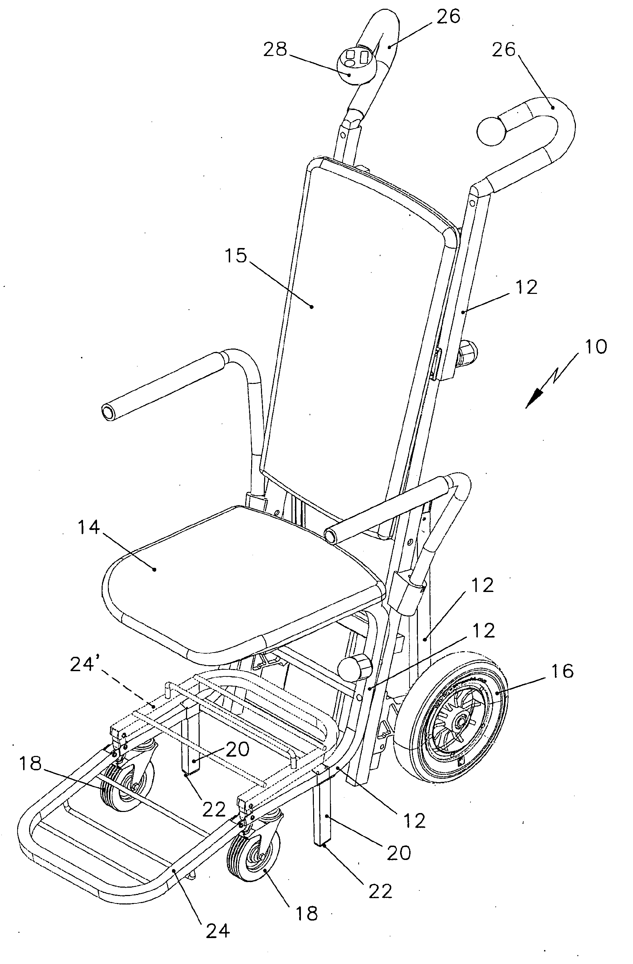

Nachfolgend wird ein bevorzugtes Ausführungsbeispiel einer Treppensteig- und Transportvorrichtung anhand einer Figur in der Zeichnung beschrieben.

Eine Treppensteig- und Transportvorrichtung 10 weist eine Rahmenkonstruktion 12 auf, an der eine Lastaufnahmevorrichtung befestigt ist. Die Lastaufnahmevorrichtung besteht hier aus einer Sitzvorrichtung, die sich aus einer Sitzfläche 14 und einer Lehnenfläche 15 zusammensetzt. Zusätzlich sind an der Rahmenkonstruktion 12 drehbar gelagert Laufräder 16 befestigt, von denen in der Figur nur ein Laufrad 16 auf einer Seite der Treppensteig- und Transportvorrichtung 10 gezeigt ist.

Den Laufrädern 16 vorauslaufend sind an der Rahmenkonstruktion 12 Lenkräder 18 befestigt. Über die Laufräder 16 und die Lenkräder 18 wird die Treppensteig- und Transportvorrichtung 10 bewegt.

Zwischen den Laufrädern 16 und den Lenkrädern 18 sind an der Rahmenkonstruktion 12 Stützfüße 20 befestigt. Die Stützfüße 20 weisen an ihrem freien Ende als Abschluss einen Stopfen 22 auf, der aus einem zäh- bzw. gummielastischen Material gefertigt ist. Die Stützfüße 20 sind von einer Bodenoberfläche, auf der die Treppensteig- und Transportvorrichtung 10 über die Laufräder 16 und Lenkräder 18 verfährt, immer beabstandet, wenn die Laufräder 16 und Lenkräder 18 eine Bodenhaftung aufweisen. Über diese Maßnahme ist gewährleistet, dass die Stützfüße 20 bei einer ordnungsgemäßen Handhabung der Treppensteig- und Transportvorrichtung 10 nicht stören und einen gewünschten Bewegungsablauf der Treppensteig- und Transportvorrichtung 10 nicht behindern.

In der Figur ist eine Beinauflage 24 gezeigt, die in gestrichelter Linienführung mit dem Bezugszeichen 24' zurückgeklappt dargestellt ist. Nimmt nun eine zu transportierende Person auf der Sitzfläche 14 Platz, so kann sie ihre Beine auf der Beinauflage 24 abstellen. Bei Bedarf kann die Beinauflage 24 in eine Position 24' zurückgeklappt werden.

Verfahren wird die Treppensteig- und Transportvorrichtung 10 über Bedienelemente 26, wie Handgriffe, an denen Bedienungsknöpfe bzw. Kontaktfelder 28 zum Bedienen einer an sich bekannten Treppensteigvorrichtung vorgesehen sein können. Eine die erfindungsgemäße Treppensteig- und Transportvorrichtung 10 bedienende Person greift die Treppensteig- und Transportvorrichtung 10 an den Bedienelementen 26 und kann über diese Bedienelemente 26 die Treppensteig- und Transportvorrichtung 10 verschieben. Über das Tasten- und Kontaktfeld 28 lässt sich die Treppensteig- und Transportvorrichtung 10 aktivieren bzw. deaktivieren.

Wird nun die Treppensteig- und Transportvorrichtung 10 in eine Richtung bewegt, in der die Lenkräder 18 vorauslaufend sind, und werden beispielsweise die Lenkräder 18 unbeabsichtigt über eine Treppenstufenkante hinaus vorgeschoben, so setzen automatisch die Stützfüße 20 dann auf der Trittflächenoberfläche einer Treppenstufe auf, wenn die Lenkräder 18 keine Treppenstufenberührung mehr aufweisen. Die Treppensteig- und Transportvorrichtung 10 kippt dabei leicht nach vorne. Die Stützfüße 20 begrenzen den Kippvorgang und verhindern einen vollkommenen Sturz bzw. ein Kippen der gesamten Treppensteig- und Transportvorrichtung 10.

Es versteht sich, dass in anderen Ausführungsformen der Erfindung auch nur ein Stützfuß 20 vorgesehen sein kann, der beispielsweise mittig innerhalb der Rahmenkonstruktion 12 angeordnet sein kann. In weiteren Ausführungsformen lassen sich die in der Figur gezeigten Stützfüße 20 längs in der Ebene, die jeweils von einem Laufrad 16 und einem Lenkrad 18 definiert ist, verschieben. Ist ein Stützfuß 20 wie gewünscht an der Rahmenkonstruktion 12 ausgerichtet, so kann er in dieser Stellung ortsfest fixiert werden. In weiteren Ausführungsformen sind die Stützfüße 20 höhenverstellbar, damit sie an unterschiedliche Größen von Lenkrädern 18 und Laufrädern 16 angepasst werden können.

## Patentansprüche

1. Treppensteig- und Transportvorrichtung (10) zum Transport von Gegenständen jedweder Art und/oder Personen, mit einer Rahmenkonstruktion (12), an der neben einer Lastaufnahmevorrichtung (14, 15) für den zu transportierenden Gegenstand und/oder für die zu transportierende Person Lauf- und Lenkräder (16, 18) und Bedienelemente (26, 28) vorgesehen sind, **dadurch gekennzeichnet, dass** hinter dem Lenkrad (18) und vor dem Laufrad (16) mindestens ein Stützfuß (20) vorgesehen ist, der bei gleichzeitiger Auflage der Lenk- und Laufräder (18, 16) auf einer Bodenoberfläche von der Bodenoberfläche beabstandet ist.

2. Treppensteig- und Transportvorrichtung nach Anspruch 1, **dadurch gekennzeichnet, dass** zwei Stützfüße (20) an der Rahmenkonstruktion (12) vorgesehen sind, die beabstandet voneinander zwischen den jeweiligen Lenk- und Laufrädern (18, 16), in der durch ein Lenk- und Laufrad (18, 16) definierten Ebene, angeordnet sind.

3. Treppensteig- und Transportvorrichtung nach Anspruch 1 oder 2, **dadurch gekennzeichnet, dass** der mindestens eine Stützfuß (20) höhenverstellbar ist.

4. Treppensteig- und Transportvorrichtung nach einem der Ansprüche 1 bis 3, **dadurch gekennzeichnet, dass** der mindestens eine Stützfuß (20) von der Rahmenkonstruktion (12) abnehmbar ist.

5. Treppensteig- und Transportvorrichtung nach einem der Ansprüche 1 bis 4, **dadurch gekennzeichnet, dass** der mindestens eine Stützfuß (20) an der Rahmenkonstruktion (12) verschiebbar vorgesehen ist.

6. Treppensteig- und Transportvorrichtung nach einem der Ansprüche 1 bis 5, **dadurch gekennzeichnet, dass** das freie Ende des mindestens einen Stützfußes (20) eine Ummantelung aus einem zäh- oder gummielastischen Werkstoff aufweist.

7. Treppensteig- und Transportvorrichtung nach Anspruch 6, **dadurch gekennzeichnet, dass** die Ummantelung als Kappe oder Stopfen (22) ausgebildet ist.
